# FASCICULE DE BREVET EUROPEEN

(11) **EP 3 896 989 B1**
(45) Date de publication et mention de la délivrance du brevet: **13.07.2022**
(21) Numéro de dépôt: 21168220.8
(22) Date de dépôt: 13.04.2021
(51) Int. Cl.: H04Q 9/00, G01D 4/00, H04W 4/80

(54) **COMPTEUR DE FLUIDE AGENCÉ POUR DÉTECTER UNE FUITE ET SÉCURISER UNE INSTALLATION**
FLUIDMESSER, DER SO ANGEORDNET IST, DASS ER EIN LECK ERKENNT UND EINE ANLAGE SICHERT
FLUID METER ARRANGED FOR DETECTING A LEAK AND SECURING AN INSTALLATION

(30) Priorité: 16.04.2020 FR 2003859
(43) Date de publication de la demande: 20.10.2021
(73) Titulaire: Sagemcom Energy & Telecom SAS, 92500 Rueil-Malmaison (FR)
(72) Inventeur: TEBOULLE, Henri, 92500 RUEIL MALMAISON (FR)
(74) Mandataire: Lavaud, Thomas

(56) Documents cités:
- WO-A1-2016/025919
- CN-U- 206 877 108
- IL-A- 166 838

## Description

L'invention concerne le domaine des compteurs de fluide communicants et de la détection de fuite dans les installations raccordées aux compteurs.

### ARRIERE PLAN DE L'INVENTION

Un réseau de distribution de gaz comprend des conduites reliées à des installations consommatrices de gaz et auxquelles sont raccordés des compteurs de gaz.

Les compteurs de gaz modernes, aussi appelés « compteurs de gaz communicants », comprennent bien sûr un dispositif de mesure destiné à mesurer la consommation de gaz d'une installation, mais aussi un module de traitement et un module de communication.

Le module de traitement permet au compteur de gaz de réaliser un certain nombre de fonctionnalités, et notamment d'analyser des données diverses, relatives par exemple à la consommation de gaz de l'installation, à la facturation de l'abonné, à l'état du réseau de distribution de gaz, ou bien au fonctionnement du compteur de gaz lui-même.

Le module de communication, quant à lui, permet au compteur de gaz de communiquer avec un Système d'Information (SI) du gestionnaire du réseau, éventuellement via un concentrateur de données, ou bien une passerelle. Le module de communication est susceptible de mettre en œuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc.

Il est fondamental de détecter rapidement et de manière fiable une fuite de gaz survenant dans l'installation d'un abonné, et de sécuriser rapidement ladite installation. En effet, une fuite de gaz peut avoir des conséquences catastrophiques : incendie, explosion, intoxication, etc.

Lorsqu'une fuite a été détectée et que le problème dont résulte la fuite a été réglé, il est important d'être en mesure de relancer rapidement l'alimentation en gaz de l'installation, pour que l'installation redevienne fonctionnelle et que l'abonné puisse retrouver une vie normale rapidement. WO 2016/025919 A1 divulgue un système de contrôle de l'écoulement de fluide avec une vanne de fermeture.

### OBJET DE L'INVENTION

L'invention a pour objet de détecter rapidement et de manière fiable une fuite de fluide survenant dans l'installation d'un abonné, de sécuriser l'installation, et de relancer rapidement l'alimentation en fluide lorsque le problème est résolu.

### RESUME DE L'INVENTION

En vue de la réalisation de ce but, on propose un compteur de fluide comportant :
- une première interface de communication agencée pour communiquer via une liaison radioélectrique avec une interface de communication d'un boîtier de coupure comprenant une vanne électromécanique, et pour transmettre via la liaison électrique une énergie électrique adaptée à alimenter électriquement l'interface de communication du boîtier de coupure ;
- un premier module de traitement agencé pour :
   . évaluer un débit de fluide fourni à une installation raccordée au compteur de fluide et, si le débit de fluide demeure supérieur à un premier seuil de débit prédéterminé pendant au moins une première durée prédéterminée, détecter une fuite de fluide dans l'installation et transmettre une trame de commande interne intégrant une commande de fermeture à l'interface de communication du boîtier de coupure via la première interface de communication pour fermer la vanne électromécanique ;
   . suite à la fermeture de la vanne électromécanique, acquérir via la première interface de communication une première trame de commande externe intégrant une commande d'ouverture et produite par le boîtier de coupure suite à une action manuelle sur un organe d'actionnement du boîtier de coupure, produire une trame de commande interne intégrant la commande d'ouverture, et transmettre ladite trame de commande interne à l'interface de communication du boîtier de coupure via la première interface de communication pour rouvrir la vanne électromécanique.

Le compteur de fluide selon l'invention est donc capable de détecter en temps réel, à partir de l'évaluation du débit de fluide, la survenue d'une fuite de fluide dans l'installation. L'impact d'une fuite de fluide dans une installation sur le débit de fluide visible dans le compteur de fluide raccordé à ladite installation est très rapide et très net, de sorte que le compteur de fluide détecte rapidement et de manière fiable la survenue de la fuite de fluide.

Lorsque le compteur de fluide détecte une fuite de fluide, la première interface de communication du compteur de fluide alimente électriquement l'interface de communication du boîtier de coupure et commande le boîtier de coupure pour que celui-ci ferme la vanne électromécanique et interrompe ainsi l'alimentation de l'installation. L'installation est donc sécurisée très rapidement.

Lorsque le problème est réglé, une action manuelle sur l'organe d'actionnement du boîtier de coupure, réalisée par exemple par l'abonné ou par un opérateur du gestionnaire du réseau, permet de commander le compteur de fluide qui lui-même commande la réouverture de la vanne électromécanique. L'alimentation en fluide de l'installation est donc relancée et l'installation redevient fonctionnelle très rapidement.

On propose de plus un compteur de fluide tel que précédemment décrit, dans lequel, suite à la transmission de la trame de commande interne et à la réouverture de la vanne électromécanique, le premier module de traitement est agencé pour maintenir la vanne électromécanique ouverte seulement si le débit de fluide demeure inférieur à un deuxième seuil de débit prédéterminé pendant au moins une deuxième durée prédéterminée après la réouverture de la vanne électromécanique.

On propose de plus un compteur de fluide tel que précédemment décrit, dans lequel le premier module de traitement est agencé pour refermer la vanne électromécanique ou pour la maintenir fermée lorsque le débit de fluide est supérieur à un troisième seuil de débit prédéterminé pendant au moins une troisième durée prédéterminée.

On propose de plus un compteur de fluide tel que précédemment décrit, comprenant en outre une deuxième interface de communication agencée pour communiquer avec un dispositif externe autre que le boîtier de coupure, le premier module de traitement étant agencé pour, suite à la fermeture de la vanne électromécanique, acquérir via la deuxième interface de communication une deuxième trame de commande externe intégrant une commande d'ouverture et produite par le dispositif externe, produire une trame de commande interne intégrant la commande d'ouverture, et transmettre ladite trame de commande interne à l'interface de communication du boîtier de coupure via la première interface de communication pour rouvrir la vanne électromécanique.

On propose de plus un compteur de fluide tel que précédemment décrit, dans lequel la première interface de communication est agencée pour écrire la trame de commande interne dans une mémoire du boîtier de coupure, puis pour lire une trame d'acquittement dans la mémoire du boîtier de coupure.

On propose de plus un compteur de fluide tel que précédemment décrit, dans lequel la trame de commande interne intègre une valeur courante d'un compteur de trames de commande internes, qui est incrémentée à chaque transmission de trame de commande interne par le compteur de fluide au boîtier de coupure.

On propose de plus un compteur de fluide tel que précédemment décrit, comprenant en outre des moyens d'authentification agencés pour authentifier la trame de commande interne.

On propose de plus un compteur de fluide tel que précédemment décrit, dans lequel les moyens d'authentification sont agencés pour chiffrer au moins partiellement la trame de commande interne en utilisant un algorithme de chiffrement ayant une clé de chiffrement symétrique qui est stockée dans une mémoire du compteur de fluide et dans une mémoire du boîtier de coupure.

On propose aussi un procédé de sécurisation d'une installation, mis en œuvre dans compteur de fluide tel que précédemment décrit, et comprenant les étapes de :
- évaluer un débit de fluide fourni à l'installation raccordée au compteur de fluide et, si le débit de fluide demeure supérieur à un premier seuil de débit prédéterminé pendant au moins une première durée prédéterminée, transmettre une trame de commande interne intégrant une commande de fermeture à l'interface de communication du boîtier de coupure via la première interface de communication pour fermer la vanne électromécanique ;
- suite à la fermeture de la vanne électromécanique, acquérir via la première interface de communication une première trame de commande externe intégrant une commande d'ouverture et produite par le boîtier de coupure suite à une action manuelle sur un organe d'actionnement du boîtier de coupure, produire une trame de commande interne intégrant la commande d'ouverture, et transmettre ladite trame de commande interne à l'interface de communication du boîtier de coupure via la première interface de communication pour rouvrir la vanne électromécanique.

On propose en outre un programme d'ordinateur comprenant des instructions qui conduisent le compteur de fluide tel que précédemment décrit à exécuter les étapes du procédé de sécurisation qui vient d'être décrit.

On propose en outre un support d'enregistrement lisible par ordinateur, sur lequel est enregistré le programme d'ordinateur qui vient d'être décrit.

On propose de plus un boîtier de coupure pouvant être monté à proximité d'un compteur de fluide, et comprenant :
- une vanne électromécanique ;
- une mémoire ;
- une interface de communication agencée pour recevoir via une liaison radioélectrique et pour stocker dans la mémoire une trame de commande interne intégrant une commande d'ouverture ou une commande de fermeture de la vanne électromécanique, la deuxième interface de communication étant en outre agencée pour recevoir et pour être alimentée par une énergie électrique transmise via la liaison radioélectrique ;

- un organe d'actionnement pouvant être actionné manuellement par une personne située à proximité du boîtier de coupure ;
- un deuxième module de traitement agencé pour acquérir dans la mémoire la trame de commande interne, pour déchiffrer la trame de commande interne et en extraire une commande d'ouverture ou une commande de fermeture, pour piloter une ouverture ou une fermeture de la vanne électromécanique, et pour écrire dans la mémoire une trame d'acquittement, le deuxième module de traitement étant en outre agencé pour détecter que l'organe d'actionnement a été actionné, et pour, suite à cet actionnement, écrire dans la mémoire une première trame de commande externe signifiant un actionnement manuel de l'organe d'actionnement demandant un envoi au boîtier de coupure d'une commande d'ouverture de la vanne électromécanique par le compteur de fluide.

On propose en outre un boîtier de coupure tel que précédemment décrit, l'organe d'actionnement étant un bouton poussoir.

On propose en outre un boîtier de coupure tel que précédemment décrit, dans lequel le deuxième module de traitement se trouve par défaut dans un mode de veille, l'interface de communication étant agencée pour produire un signal d'activation du deuxième module de traitement lorsque la deuxième interface de communication reçoit de l'énergie électrique.

On propose en outre un boîtier de coupure tel que précédemment décrit, dans lequel une clé de chiffrement symétrique d'un algorithme de chiffrement est stockée dans la mémoire du boîtier de coupure, le deuxième module de traitement étant agencé pour déchiffrer la trame de commande interne en utilisant la clé de chiffrement symétrique.

On propose aussi un système de mesure comportant un compteur de fluide tel que précédemment décrit et un boîtier de coupure tel que précédemment décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 représente un Système d'Information, un concentrateur de données, un compteur de gaz et un boîtier de coupure ;
[Fig. 2] la figure 2 représente le boîtier de coupure ;
[Fig. 3] la figure 3 représente des échanges de commandes, de trames et de messages entre les entités de la figure 1, dans le cas où le compteur de gaz détecte une fuite de gaz ; [Fig. 4] la figure 4 représente des échanges de commandes, de trames et de messages entre les entités de la figure 1, dans le cas où la vanne électromécanique est rouverte via une action manuelle sur un organe d'actionnement du boîtier de coupure ;
[Fig. 5] la figure 5 représente des échanges de commandes, de trames et de messages entre les entités de la figure 1, dans le cas où la vanne électromécanique est rouverte par le SI ;
[Fig. 6] la figure 6 représente une trame de commande interne ;
[Fig. 7] la figure 7 représente une trame d'acquittement.

### DESCRIPTION DETAILLEE DE L'INVENTION

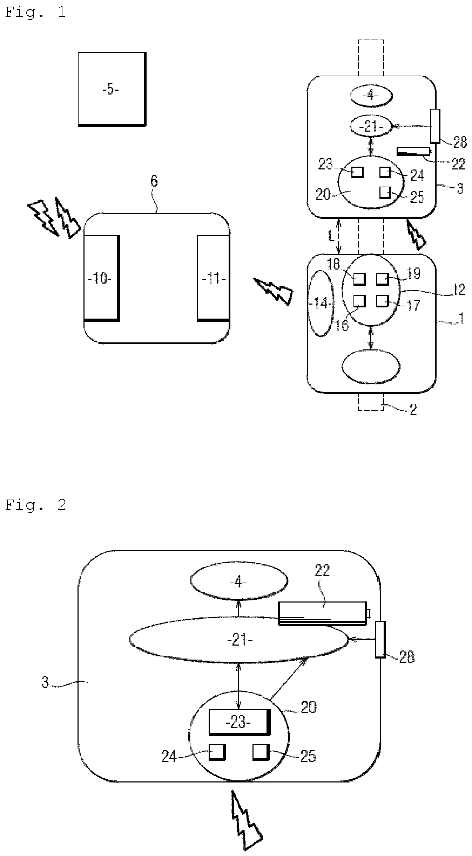

En référence aux figures 1 et 2, le compteur de fluide selon l'invention est ici un compteur de gaz 1 qui est monté sur une conduite 2 d'un réseau de distribution de gaz naturel et qui est utilisé pour mesurer la consommation en gaz d'une installation.

Un boîtier de coupure 3 est monté sur la conduite 2 à proximité du compteur de gaz 1. Le boîtier de coupure 3 peut être situé en amont ou en aval du compteur de gaz 1. La distance L entre le compteur de gaz 1 et le boîtier de coupure 3 est par exemple comprise entre 1cm et 10cm. Le boîtier de coupure 3 comprend une vanne électromécanique 4 qui est utilisée pour sélectivement couper ou rétablir l'alimentation en gaz de l'installation.

Dans un mode de fonctionnement nominal, les commandes d'ouverture ou de fermeture de la vanne électromécanique 4 sont émises par un SI 5 (pour Système d'Information) qui transmet les commandes d'ouverture ou de fermeture au compteur de gaz 1 via un concentrateur de données 6. Le compteur de gaz 1 retransmet ces commandes d'ouverture ou de fermeture au boîtier de coupure 3.

On décrit brièvement chacune de ces entités.

Le SI 5 comprend un ou des serveurs et un module de communication qui lui permet de communiquer via un réseau cellulaire de type 2G, 3G ou 4G avec des concentrateurs de données tels que le concentrateur de données 6.

Le concentrateur de données 6 comprend des premiers moyens de communication 10 pour communiquer avec le SI 5 via un réseau cellulaire 2G, 3G ou 4G, et des deuxièmes moyens de communication 11 pour communiquer avec le compteur de gaz 1. Les deuxièmes moyens de communication 11 permettent au concentrateur de données 6 de communiquer via une communication radio, qui utilise ici le standard *Wize* opérant à la fréquence de 169MHz.

Le compteur de gaz 1 est un compteur ultrasonique. Le compteur de gaz 1 est un compteur communicant.

Le compteur de gaz 1 comprend une première interface de communication 12 et une deuxième interface de communication 14.

La première interface de communication 12 est ici une interface NFC maître (NFC pour *Near Field Communication,* ou « Communication en champ proche » en français).

La première interface de communication 12 comporte tout d'abord un premier module de traitement, qui comprend un premier composant de traitement. Le premier composant de traitement est par exemple un processeur, un microcontrôleur, ou bien un circuit logique programmable tel qu'un FPGA (pour *Field Programmable Gate Arrays)* ou un ASIC (pour *Application Specific Integrated Circuit)* . Le premier composant de traitement est ici un premier microcontrôleur 16.

La première interface de communication 12 comporte aussi une première mémoire 17, un émetteur/récepteur NFC 18 et une première antenne 19. L'émetteur/récepteur NFC 18 comprend ici un amplificateur, un modulateur et un démodulateur.

La deuxième interface de communication 14 est adaptée à communiquer via une communication radio utilisant le standard *Wize* opérant à la fréquence de 169MHz. Le compteur de gaz 1 peut recevoir les commandes d'ouverture ou de fermeture de la vanne électromécanique 4, provenant du SI 5 et via le concentrateur de données 6, grâce à la deuxième interface de communication 14.

Le compteur de gaz 1 comporte de plus des moyens d'authentification qui comprennent ici un module logiciel programmé dans le premier microcontrôleur 16 et une zone de la première mémoire 17.

Le boîtier de coupure 3, quant à lui, comprend, outre la vanne électromécanique 4, une interface de communication 20 qui est ici une interface NFC esclave, un deuxième module de traitement, et une pile 22. Le deuxième module de traitement comprend un deuxième composant de traitement qui est par exemple un processeur, un microcontrôleur, ou bien un circuit logique programmable tel qu'un FPGA ou un ASIC. Le deuxième composant de traitement est en l'occurrence un deuxième microcontrôleur 21.

L'interface de communication 20 comprend une deuxième mémoire 23, un récepteur NFC 24 et une deuxième antenne 25. Le récepteur NFC 24 comprend par exemple un démodulateur.

Le deuxième microcontrôleur 21 est agencé pour piloter (via un *driver,* ou « pilote » en français, non représenté sur les figures) une ouverture ou une fermeture de la vanne électromécanique 4. Le deuxième microcontrôleur 21 comprend ici une interface I2C pour accéder à la deuxième mémoire 23 en lecture et en écriture.

La pile 22 du boîtier de coupure 3 est utilisée pour alimenter le deuxième microcontrôleur 21 et la vanne électromécanique 4 (ainsi que le *driver).*

Le boîtier de coupure 3 comprend de plus un organe d'actionnement destiné à être actionné par une action manuelle d'un individu.

L'organe d'actionnement est ici un bouton poussoir 28 situé sur le boîtier de coupure 3 et qui est donc accessible depuis l'extérieur du boîtier de coupure 3.

On décrit maintenant la manière dont le compteur de gaz 1 détecte une fuite de gaz et sécurise l'installation.

Le premier microcontrôleur 16 du compteur de gaz 1 évalue en temps réel un débit de gaz fourni à l'installation qui est raccordée au compteur de gaz 1.

Le premier microcontrôleur 16 compare le débit de gaz avec un premier seuil de débit prédéterminé. Le débit de gaz est une pente de la quantité de gaz en fonction du temps. Le débit de gaz est ici exprimé en m³/s.

Si le débit de gaz demeure supérieur à un premier seuil de débit prédéterminé pendant au moins une première durée prédéterminée, c'est-à-dire si :
D > D₀ pendant une durée continue T > T₀,
où D est le débit de gaz, D₀ est le premier seuil de débit prédéterminé, T₀ est la première durée prédéterminée,
le premier microcontrôleur 16 du compteur de gaz 1 détecte une fuite de gaz dans l'installation.

Ici, on a par exemple D₀ = 0,000080m³/s et T₀ = 900s.

Un tel débit de gaz sur une durée aussi longue ne correspond en effet pas à une consommation normale des appareils de l'installation, mais révèle une fuite de gaz dans l'installation.

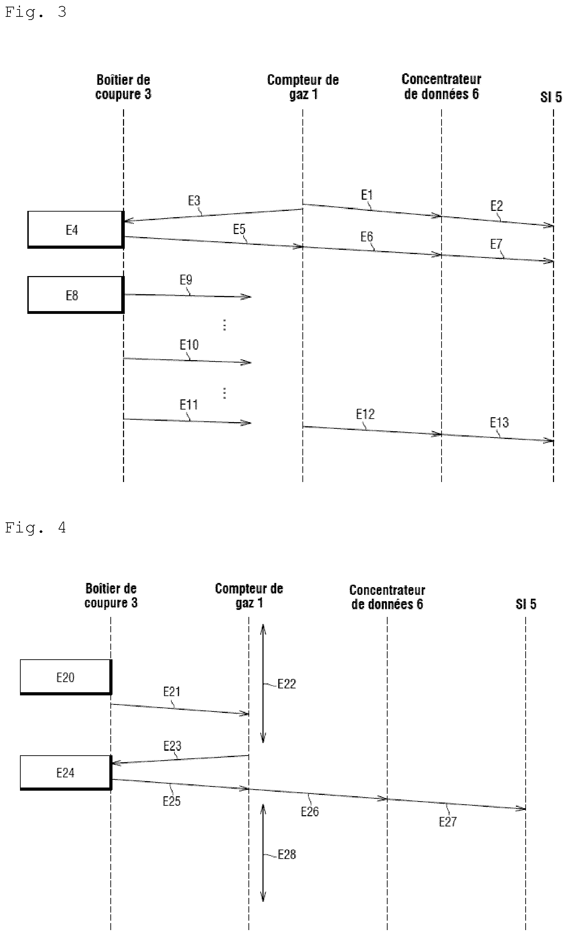

En référence à la figure 3, lorsque le premier microcontrôleur 16 du compteur de gaz 1 détecte une fuite de gaz, le premier microcontrôleur 16 génère une alarme relative à la fuite de gaz à destination du SI 5. L'alarme relative à la fuite de gaz est tout d'abord transmise par le compteur de gaz 1 au concentrateur de données 6 via la communication radio à 169MHz (étape E1), puis par le concentrateur de données 6 au SI 5 via le réseau 2G, 3G ou 4G, en utilisant une requête *http POST* et le protocole *TR-69* (étape E2).

Simultanément, le premier microcontrôleur 16 du compteur de gaz 1 produit une trame de commande interne qui intègre une commande de fermeture de la vanne électromécanique 4 du boîtier de coupure 3.

La trame de commande interne est authentifiée par les moyens d'authentification du compteur de gaz 1. L'authentification consiste à chiffrer au moins partiellement la trame de commande interne.

Les moyens d'authentification utilisent un algorithme de chiffrement ayant une clé de chiffrement symétrique « secrète » qui est stockée dans la zone de la première mémoire 17 de la première interface de communication 12.

L'algorithme de chiffrement est un algorithme de chiffrement AES (pour *Advanced Encryption Standard)* utilisant le mode d'opération GCM (pour *Galois Counter Mode)* . L'algorithme de chiffrement permet de chiffrer et de déchiffrer des données par blocs de 128 bits. La clé de chiffrement symétrique est une clé sur 128 bits.

La clé de chiffrement symétrique est aussi stockée dans une première zone de la deuxième mémoire 23 de l'interface de communication 20 du boîtier de coupure 3, et est donc connue à la fois de la première interface de communication 12 et de l'interface de communication 20. Le compteur de gaz 1 et le boîtier de coupure 3 sont associés via cette même clé de chiffrement symétrique. L'association est par exemple réalisée en usine, à la fin de la fabrication du compteur de gaz 1 et du boîtier de coupure 3, par chargement de la clé de chiffrement symétrique dans la première mémoire 17 du compteur de gaz 1 et dans la deuxième mémoire 23 de l'organe de coupure 3. L'association peut aussi être réalisée lors de l'installation sur site.

Le premier microcontrôleur 16 transmet la trame de commande interne à l'interface de communication 20 du boîtier de coupure 3 via la première interface de communication 12, et donc en utilisant la technologie NFC, pour fermer la vanne électromécanique 4 (étape E3).

La première interface de communication 12 produit pour cela grâce à l'émetteur/récepteur NFC 18 et à la première antenne 19 un champ électromagnétique qui va induire un courant dans la deuxième antenne 25 de l'interface de communication 20. Le champ électromagnétique permet de former une liaison radioélectrique permettant à la première interface de communication 12 de transmettre à l'interface de communication 20 la trame de commande interne, mais aussi une énergie électrique qui alimente l'interface de communication 20. L'interface de communication 20 n'est donc pas alimentée par la pile 22 du boîtier de coupure 3 mais uniquement par cette énergie électrique transmise via la liaison radioélectrique.

On note ici qu'avantageusement, pour optimiser la transmission d'énergie électrique, la première antenne 19 et la deuxième antenne 25 sont positionnées en face l'une de l'autre et s'étendent chacune dans un plan perpendiculaire à l'axe passant par leurs centres respectifs.

La première interface de communication 12 écrit alors la trame de commande interne dans une deuxième zone de la deuxième mémoire 23 de l'interface de communication 20.

Le deuxième microcontrôleur 21 du boîtier de coupure 3 se trouve en général, par défaut, dans un mode de veille. Lorsque l'interface de communication 20 reçoit l'énergie électrique transmise par la première interface de communication 12, elle produit un signal d'activation qui va réveiller le deuxième microcontrôleur 21.

Le signal d'activation est un signal d'interruption appliqué sur une patte du deuxième microcontrôleur 21. En variante, un signal de type « *memory busy* », généré par l'interface de communication 20, pourrait aussi être utilisé pour réveiller le deuxième microcontrôleur 21.

Le deuxième microcontrôleur 21 va alors accéder à la trame de commande interne en lisant dans la deuxième zone de la deuxième mémoire 23. Le deuxième microcontrôleur 21 déchiffre grâce à sa connaissance de la clé de chiffrement symétrique la trame de commande interne, extrait de la trame de commande interne la commande de fermeture, et pilote la vanne électromécanique 4 pour la fermer.

Puis, suite à la fermeture de la vanne électromécanique 4, le deuxième microcontrôleur 21 écrit dans une troisième zone de la deuxième mémoire 23 de l'interface de communication 20, à destination de la première interface de communication 12 du compteur de gaz 1, une trame d'acquittement intégrant un acquittement (étape E4).

Le deuxième microcontrôleur 21 authentifie la trame d'acquittement en utilisant l'algorithme de chiffrement précédemment évoqué.

La première interface de communication 12 du compteur de gaz 1 accède à la troisième zone de la deuxième mémoire 23 de l'interface de communication 20, pour tenter de lire dans la troisième zone de la deuxième mémoire 23 une trame d'acquittement (étape E5). La lecture est réalisée par une méthode de *polling :* à intervalles réguliers, la première interface de communication 12 accède au contenu de la troisième zone de la deuxième mémoire 23 pour déterminer si une trame d'acquittement se trouve bien dans la troisième zone de la deuxième mémoire 23.

Si la trame d'acquittement est bien présente lors de la première tentative de lecture, le compteur de gaz 1 va lui-même remonter un message d'acquittement au concentrateur de données 6 (étape E6). Le concentrateur de données 6 retransmet le message d'acquittement au SI 5 (étape E7).

Suite à la transmission de la trame de commande interne au boîtier de coupure 3, si aucune trame d'acquittement n'est stockée dans la troisième zone de la deuxième mémoire 23 (étape E8), la première tentative de lecture échoue (étape E9). La première interface de communication 12 effectue alors une deuxième tentative de lecture (étape E10). Si celle-ci échoue, la première interface de communication 12 effectue une troisième tentative de lecture (étape E11). Chaque tentative de lecture est séparée de la précédente d'une durée prédéterminée, ici égale à 1mn. Après un nombre prédéterminé de tentatives de lecture infructueuses, ici égal à 3, le compteur de gaz 1 remonte un message d'erreur au concentrateur de données 6 (étape E12). Le concentrateur de données 6 retransmet le message d'erreur au SI 5 et transmet une alerte pour informer le SI 5 que la vanne électromécanique 4 du boîtier de coupure 3 n'a pas été refermée (étape E13).

Le premier microcontrôleur 16 de la première interface de communication 12 met en œuvre un compteur de trames de commande internes dont la valeur courante est intégrée dans chaque trame de commande interne. Le compteur de trames de commande internes est incrémenté par le premier microcontrôleur 16 à chaque transmission de trame de commande interne par le compteur de gaz 1 au boîtier de coupure 3.

Ce compteur de trames de commande internes permet d'éviter le « rejeu » d'une trame de commande interne, c'est-à-dire d'éviter qu'une ancienne trame de commande interne, écoutée et acquise par un individu malintentionné, soit utilisée pour produire une commande d'ouverture ou de fermeture destinée à commander frauduleusement le boîtier de coupure 3. Ainsi, lorsque le deuxième microcontrôleur 21 du boîtier de coupure 3 acquiert une trame de commande interne, il vérifie que la valeur courante du compteur de trames de commande internes, intégrée dans ladite trame de commande interne, est supérieure strictement à celle intégrée dans la trame de commande interne précédente.

De même, le deuxième microcontrôleur 21 du boîtier de coupure 3 met en œuvre un compteur de trames d'acquittement qui est incrémenté à chaque fois que le deuxième microcontrôleur 21 produit une trame d'acquittement, et dont la valeur courante est intégrée dans la trame d'acquittement.

Suite à la réception par le SI 5 de l'alarme relative à la fuite de gaz, un opérateur se déplace et vient constater et résoudre le problème qui a causé cette fuite de gaz. L'abonné peut aussi régler tout seul le problème dont résulte la fuite.

Lorsque l'une de ces personnes considère que le problème a été réglé et que tout risque a été éliminé, cette personne commande localement l'ouverture de la vanne électromécanique 4 par une action manuelle sur le bouton poussoir 28 du boîtier de coupure 3. L'action manuelle est un appui long. L'appui long est un appui ayant une durée supérieure à un seuil prédéterminé, égal à 2s par exemple. L'appui long sur le bouton poussoir 28 réveille le deuxième microcontrôleur 21 du boîtier de coupure 3.

En référence à la figure 4, lorsque le deuxième microcontrôleur 21 du boîtier de coupure 3 est réveillé et détecte cet appui long sur le bouton poussoir 28, le deuxième microcontrôleur 21 écrit dans la troisième zone de la deuxième mémoire 23 de l'interface de communication 20, à destination de la première interface de communication 12 du compteur de gaz 1, une première trame de commande externe signifiant un actionnement manuel de l'organe d'actionnement du boîtier de coupure 3 demandant l'envoi au boîtier de coupure 3 d'une commande d'ouverture de la vanne électromécanique (4) par le compteur de gaz 1 (étape E20).

La première interface de communication 12 du compteur de gaz 1 accède à la troisième zone de la deuxième mémoire 23 de l'interface de communication 20, pour tenter de lire dans la troisième zone de la deuxième mémoire 23 la première trame de commande externe (étape E21).

La lecture est à nouveau réalisée par une méthode de *polling.* Après que le compteur de gaz 1 a détecté une fuite et commandé la fermeture de la vanne électromécanique 4, le compteur de gaz 1 réalise un *polling* lent et régulier. A intervalles réguliers, la première interface de communication 12 accède au contenu de la troisième zone de la deuxième mémoire 23 pour déterminer si une première trame de commande externe se trouve bien dans la troisième zone de la deuxième mémoire 23 (étape E22).

Chaque intervalle régulier peut avoir une durée fixe, égale par exemple à 5mn.

La durée des intervalles réguliers peut aussi être variable et, par exemple, augmenter dans le temps. La durée des intervalles réguliers pourrait ainsi par exemple être multipliée par 2 toutes les 6h, jusqu'à ce qu'elle atteigne une durée maximale égale à 24h (c'est-à-dire qu'on arrête la multiplication par 2 lorsque l'on atteint ou dépasse 24h).

La première interface de communication 12 du compteur de gaz 1 acquiert la première trame de commande externe lorsque celle-ci est présente.

Le premier microcontrôleur 16 du compteur de gaz 1 décide alors de rouvrir la vanne électromécanique 4.

Le premier microcontrôleur 16 produit une trame de commande interne qui intègre une commande d'ouverture de la vanne électromécanique 4 du boîtier de coupure 3.

Le premier microcontrôleur 16 transmet la trame de commande interne à l'interface de communication 20 du boîtier de coupure 3 via la première interface de communication 12, pour rouvrir la vanne électromécanique 4 (étape E23). Plus précisément, la première interface de communication 12 écrit la trame de commande interne dans la deuxième zone de la deuxième mémoire 23 de l'interface de communication 20. Le deuxième microcontrôleur 21 accède à la trame de commande interne et la déchiffre, puis pilote la vanne électromécanique 4 pour la rouvrir.

Puis, suite à la réouverture de la vanne électromécanique 4, le deuxième microcontrôleur 21 écrit dans la troisième zone de la deuxième mémoire 23 de l'interface de communication 20, à destination de la première interface de communication 12 du compteur de gaz 1, une trame d'acquittement intégrant un acquittement (étape E24). A nouveau, par une méthode de *polling,* la première interface de communication 12 du compteur de gaz 1 accède à la troisième zone de la deuxième mémoire 23 de l'interface de communication 20, pour tenter de lire dans la troisième zone de la deuxième mémoire 23 la trame d'acquittement (étape E25). Si la trame d'acquittement est bien présente, le compteur de gaz 1 va lui-même remonter un message d'acquittement au concentrateur de données 6 (étape E26). Le concentrateur de données 6 retransmet le message d'acquittement au SI 5 (étape E27).

On note que, suite à la transmission de la trame de commande interne intégrant la commande d'ouverture et à la réouverture de la vanne électromécanique 4, le premier microcontrôleur 16 maintient la vanne électromécanique 4 ouverte seulement s'il constate qu'il n'y a pas de consommation de gaz pendant au moins une deuxième durée prédéterminée après la réouverture de la vanne électromécanique 4, c'est-à-dire si le débit de gaz demeure inférieur à un deuxième seuil de débit prédéterminé pendant au moins la deuxième durée prédéterminée (étape E28).

Ainsi, le compteur de gaz 1 ne laisse ouverte la vanne électromécanique 4 que si :
D < D₁ pendant une durée continue T > T₁,
où D est le débit de gaz, D₁ est le deuxième seuil de débit prédéterminé, T₁ est la deuxième durée prédéterminée.

Ici, on a par exemple D₁ = 0,000040m3/s et T₁ = 10s.

En effet, comme la vanne électromécanique 4 était fermée, l'installation ne consomme pas de gaz au moment de la réouverture de la vanne électromécanique 4, de sorte que le compteur de gaz 1 ne devrait voir aucun débit de gaz à la réouverture de la vanne électromécanique 4, sauf dans le cas où une fuite de gaz est toujours présente dans l'installation.

Enfin, quoiqu'il arrive et quelle que soit la situation, le premier microcontrôleur 16 du compteur de gaz 1 referme la vanne électromécanique 4 (si elle était ouverte) ou bien la maintient fermée (si elle était fermée) lorsque le débit de gaz est supérieur à un troisième seuil de débit prédéterminé pendant au moins une troisième durée prédéterminée.

Ainsi, dans tous les cas, si le premier microcontrôleur 16 constate que D > D₂ pendant une durée continue T > T₂,
où D est le débit de gaz, D₂ est le troisième seuil de débit prédéterminé, T₂ est la troisième durée prédéterminée,
le compteur de gaz 1 ferme la vanne électromécanique 4 ou la maintient fermée quoiqu'il advienne.

Ici, on a par exemple D₂ = 0,01m3/s et T₂ = 20s.

En effet, un tel débit de gaz est trop important pour être tiré par un (ou plusieurs) appareil de l'installation en fonctionnement normal, de sorte que ce débit est nécessairement provoqué par une fuite et doit être interrompu rapidement.

On note que le deuxième microcontrôleur 21 du boîtier de coupure 3 met en œuvre un compteur de premières trames de commande externes, qui est incrémenté à chaque fois que le deuxième microcontrôleur 21 produit une première trame de commande externe, et dont la valeur courante est intégrée dans la première trame de commande externe.

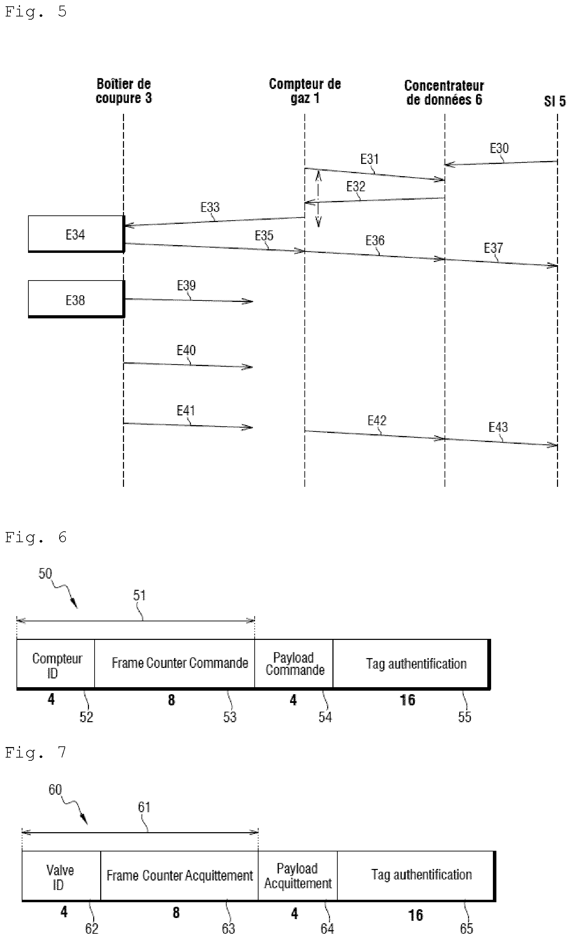

En référence à la figure 5, alternativement, le SI 5 peut parfaitement commander (via le concentrateur de données 6 et le compteur de gaz 1) la réouverture de la vanne électromécanique 4.

Le SI 5 produit une commande d'ouverture de la vanne électromécanique 4 du boîtier de coupure 3, et transmet la commande d'ouverture au concentrateur de données 6 en utilisant une requête *http POST* et le protocole *TR-69* (étape E30) .

A intervalles réguliers, le compteur de gaz 1 envoie une trame de collecte au concentrateur de données 6 (étape E31) .

Le concentrateur de données 6 attend la réception de la trame de collecte et, lorsqu'il reçoit la trame de collecte, le concentrateur de données 6 envoie une deuxième trame de commande externe intégrant la commande d'ouverture dans la fenêtre d'écoute du compteur de gaz 1 (étape E32). Le concentrateur de données 6 utilise pour cela la communication radio utilisant le standard *Wize* opérant à la fréquence de 169MHz.

Le premier microcontrôleur 16 du compteur de gaz 1 acquiert la deuxième trame de commande externe via la deuxième interface de communication 14, et produit une trame de commande interne qui intègre la commande d'ouverture de la vanne électromécanique 4 du boîtier de coupure 3.

La trame de commande interne est authentifiée par les moyens d'authentification du compteur de gaz 1.

Le compteur de gaz 1 transmet alors la trame de commande interne au boîtier de coupure 3 en utilisant la technologie NFC, de la même manière que précédemment décrit (étape E33).

Le deuxième microcontrôleur 21 du boîtier de coupure 3 pilote la vanne électromécanique 4 pour l'ouvrir.

Puis, suite à l'ouverture de la vanne électromécanique 4, le deuxième microcontrôleur 21 produit et authentifie la trame d'acquittement, puis l'écrit dans la deuxième mémoire 23 (étape E34).

La première interface de communication 12 tente de lire dans la deuxième mémoire 23 une trame d'acquittement (étape E35). La lecture est réalisée par la méthode de *polling* décrite plus tôt.

Si la trame d'acquittement est bien présente lors de la première tentative de lecture, le compteur de gaz 1 remonte un message d'acquittement au concentrateur de données 6 (étape E36) qui le remonte au SI 5 (étape E37).

Suite à la transmission de la trame de commande interne au boîtier de coupure 3, si aucune trame d'acquittement n'est stockée dans la troisième zone de la deuxième mémoire 23 (étape E38), la première tentative de lecture échoue (étape E39). La première interface de communication 12 effectue alors une deuxième tentative de lecture (étape E40). Si celle-ci échoue, la première interface de communication 12 effectue une troisième tentative de lecture (étape E41). Chaque tentative de lecture est séparée de la précédente d'une durée prédéterminée, ici égale à 1mn. Après un nombre prédéterminé de tentatives de lecture infructueuses, ici égal à 3, le compteur de gaz 1 remonte un message d'erreur au concentrateur de données 6 (étape 42) qui le remonte au SI 5 (étape 43).

On note que la figure 5 correspond aussi au cas « nominal » de fonctionnement du système : lorsqu'aucune anomalie relative à la température du gaz n'est détectée, c'est le SI 5 qui produit les commandes d'ouverture ou de fermeture pour actionner la vanne électromécanique 4 du boîtier de coupure 3.

On décrit maintenant plus en détail, en référence à la figure 6, la structure d'une trame de commande interne produite par le compteur de gaz 1 et à destination du boîtier de coupure 3).

La trame de commande interne 50 comprend tout d'abord une valeur initiale IV 51 (pour *Initial Value),* qui est non chiffrée et qui est conforme à la recommandation NIST *Special Publication* 800-38, chapitre 8.2.1.

La valeur initiale IV 51 est découpée en un premier champ 52 et en un deuxième champ 53.

Le premier champ 52 est un champ de 4 octets qui contient un identifiant de l'émetteur du message, en l'occurrence un identifiant du compteur de gaz 1.

Le deuxième champ 53 est un champ de 8 octets qui contient la valeur courante du compteur de trames de commande internes. Le deuxième champ 53 permet plus de **18×10¹⁸** commandes sans changement de clé de chiffrement symétrique, et est réinitialisé à 0 lors de chaque changement de clé de chiffrement symétrique.

La trame de commande interne 50 comprend ensuite une *payload* 54 (ou « charge utile » en français) qui est un champ fonctionnel destiné à identifier la fonction de la trame : commande d'ouverture, commande de fermeture ou acquittement. La *payload* 54 est chiffrée par l'algorithme de chiffrement AES utilisant le mode d'opération GCM, et comporte 4 octets.

La *payload* 54 comprend un octet de commande qui prend les valeurs suivantes :
'0' : pour une commande d'ouverture de la vanne électromécanique 4. Il s'agit alors d'une trame de commande interne venant du compteur de gaz 1 ;
'1' : pour une commande de fermeture de la vanne électromécanique 4. Il s'agit alors d'une trame de commande interne venant du compteur de gaz 1 ;
'2' : pour un acquittement. Il s'agit alors d'une trame d'acquittement venant du boîtier de coupure 3.
'3' : pour un appui long effectué sur le bouton poussoir 28. Il s'agit alors d'une première trame de commande externe venant du boîtier de coupure 3, qui intègre une commande d'ouverture.

L'octet de commande de la *payload* 54 de la trame de commande interne 50 a donc pour valeur '0' dans le cas d'une commande d'ouverture et pour valeur '1' dans le cas d'une commande de fermeture.

La *payload* 54 comprend de plus 3 octets non utilisés.

On note que l'algorithme de chiffrement utilisé génère un aléa de 16 octets sur l'octet de commande.

La trame de commande interne 50 comprend ensuite un code d'authentification de message 55 (aussi appelé tag) sur 16 octets généré par l'algorithme de chiffrement AES utilisant le mode d'opération GCM. Le code d'authentification de message 55 permet d'authentifier la trame de commande interne 50, d'assurer l'intégrité des données qu'elle contient et de confirmer que la trame de commande interne 50 provient bien d'un émetteur attendu (en l'occurrence ici du compteur de gaz 1).

On décrit maintenant, en référence à la figure 7, une trame d'acquittement produite par le boîtier de coupure 3 et à destination du compteur de gaz 1.

Une trame d'acquittement 60 comprend tout d'abord une valeur initiale IV 61 découpée en un premier champ 62 et en un deuxième champ 63.

Le premier champ 62 est un champ de 4 octets qui contient un identifiant de l'émetteur du message, en l'occurrence un identifiant du boîtier de coupure 3.

Le deuxième champ 63 est un champ de 8 octets qui contient la valeur courante du compteur de trames d'acquittement. Ce deuxième champ 63 permet plus de **18×10¹⁸** acquittements sans changement de clé de chiffrement symétrique, et est réinitialisé à 0 lors de chaque changement de clé de chiffrement symétrique.

La trame d'acquittement 60 comprend ensuite une *payload* 64 chiffrée par l'algorithme de chiffrement AES utilisant le mode d'opération GCM, et comporte 4 octets.

L'octet de commande de la *payload* 64 de la trame d'acquittement 60 a pour valeur '2'.

La *payload* 64 comprend de plus 3 octets non utilisés.

On note que l'algorithme de chiffrement utilisé génère un aléa de 16 octets sur l'octet de commande.

La trame d'acquittement 60 comprend ensuite un code d'authentification de message 65 (aussi appelé tag) sur 16 octets généré par l'algorithme de chiffrement AES utilisant le mode d'opération GCM. Le code d'authentification de message 65 permet d'authentifier la trame d'acquittement 60, d'assurer l'intégrité des données qu'elle contient et de confirmer que la trame d'acquittement 60 provient bien d'un émetteur attendu (en l'occurrence ici du boîtier de coupure 3) .

On note qu'une première trame de commande externe, produite par le boîtier de coupure 3 suite à un appui long sur le bouton poussoir 28, a une structure relativement proche de celles qui viennent d'être décrites. L'octet de commande de la *payload* de la première trame de commande externe a pour valeur '3'.

On constate enfin que le compteur de gaz 1 présente l'avantage d'être autosuffisant pour détecter une fuite et couper l'alimentation. Il n'est pas nécessaire d'ajouter au système un dispositif supplémentaire, tel qu'une chambre tampon dans le réseau, qui se chargerait et se déchargerait à la manière d'une batterie dynamique.

Bien entendu, l'invention n'est pas limitée au mode de réalisation décrit mais englobe toute variante entrant dans le champ de l'invention telle que définie par les revendications.

Les architectures fonctionnelles et matérielles du SI, du concentrateur de données, du compteur de gaz et du boîtier de coupure pourraient être différentes de celles décrites ici. Par exemple, un certain nombre de tâches qui sont ici réalisées par le premier microcontrôleur du compteur de gaz pourraient être réalisées dans un autre composant de traitement du compteur de gaz, qui n'appartient pas nécessairement à la première interface de communication.

Les technologies et les protocoles de communication qui permettent de connecter entre eux le SI, le concentrateur de données, le compteur de gaz et le boîtier de coupure pourraient être différents de ceux décrits ici.

La première interface de communication du compteur et l'interface de communication du boîtier de coupure ne sont pas nécessairement des interfaces NFC. Un autre type de technologie ou de protocole, et par exemple une technologie et un protocole « propriétaires », pourraient être utilisés. Toute liaison radioélectrique, qui permet à la fois de transmettre des données (commandes, acquittements, etc.) et une énergie électrique suffisante pour alimenter une interface de communication, rentre dans le champ de l'invention.

La deuxième interface de communication du compteur lui permet de communiquer avec un dispositif externe, autre que le boîtier de coupure, qui n'est pas nécessairement un concentrateur de données, mais qui pourrait être une passerelle, ou bien le SI directement.

L'invention peut bien sûr être mise en œuvre dans un compteur utilisé pour mesurer une consommation de tout type de fluide : gaz, liquide, pétrole, etc.

D'autres algorithmes de chiffrement pourraient être utilisés, et par exemple les algorithmes *Twofish, Serpent, Blowfish.* Plus généralement, les moyens d'authentification pourraient être différents de ceux décrits ici. Tout moyen d'authentification, permettant de certifier l'authenticité d'une trame, peut être utilisé.

## Revendications

1. Compteur de fluide (1) comportant :
- une première interface de communication (12) agencée pour communiquer via une liaison radioélectrique avec une interface de communication (20) d'un boîtier de coupure (3) comprenant une vanne électromécanique (4), et pour transmettre via la liaison électrique une énergie électrique adaptée à alimenter électriquement l'interface de communication du boîtier de coupure ;
- un premier module de traitement (16) agencé pour :
. évaluer un débit de fluide fourni à une installation raccordée au compteur de fluide et, si le débit de fluide demeure supérieur à un premier seuil de débit prédéterminé pendant au moins une première durée prédéterminée, détecter une fuite de fluide dans l'installation et transmettre une trame de commande interne (50) intégrant une commande de fermeture à l'interface de communication du boîtier de coupure via la première interface de communication pour fermer la vanne électromécanique ;
. suite à la fermeture de la vanne électromécanique, acquérir via la première interface de communication une première trame de commande externe intégrant une commande d'ouverture et produite par le boîtier de coupure (3) suite à une action manuelle sur un organe d'actionnement (28) du boîtier de coupure, produire une trame de commande interne intégrant la commande d'ouverture, et transmettre ladite trame de commande interne à l'interface de communication du boîtier de coupure via la première interface de communication pour rouvrir la vanne électromécanique.

2. Compteur de fluide selon la revendication 1, dans lequel, suite à la transmission de la trame de commande interne et à la réouverture de la vanne électromécanique (4), le premier module de traitement (16) est agencé pour maintenir la vanne électromécanique ouverte seulement si le débit de fluide demeure inférieur à un deuxième seuil de débit prédéterminé pendant au moins une deuxième durée prédéterminée après la réouverture de la vanne électromécanique.

3. Compteur de fluide selon l'une des revendications précédentes, dans lequel le premier module de traitement (16) est agencé pour refermer la vanne électromécanique (4) ou pour la maintenir fermée lorsque le débit de fluide est supérieur à un troisième seuil de débit prédéterminé pendant au moins une troisième durée prédéterminée.

4. Compteur de fluide selon l'une des revendications précédentes, comprenant en outre une deuxième interface de communication (14) agencée pour communiquer avec un dispositif externe autre que le boîtier de coupure (3), le premier module de traitement étant agencé pour, suite à la fermeture de la vanne électromécanique, acquérir via la deuxième interface de communication une deuxième trame de commande externe intégrant une commande d'ouverture et produite par le dispositif externe, produire une trame de commande interne intégrant la commande d'ouverture, et transmettre ladite trame de commande interne à l'interface de communication du boîtier de coupure via la première interface de communication pour rouvrir la vanne électromécanique.

5. Compteur de fluide selon l'une des revendications précédentes, dans lequel la première interface de communication (12) est agencée pour écrire la trame de commande interne (50) dans une mémoire (23) du boîtier de coupure, puis pour lire une trame d'acquittement (60) dans la mémoire du boîtier de coupure.

6. Compteur de fluide selon la revendication 5, dans lequel la trame de commande interne (50) intègre une valeur courante d'un compteur de trames de commande internes (53), qui est incrémentée à chaque transmission de trame de commande interne par le compteur de fluide au boîtier de coupure.

7. Compteur de fluide selon l'une des revendications précédentes, comprenant en outre des moyens d'authentification agencés pour authentifier la trame de commande interne.

8. Compteur de fluide selon la revendication 7, dans lequel les moyens d'authentification sont agencés pour chiffrer au moins partiellement la trame de commande interne (50) en utilisant un algorithme de chiffrement ayant une clé de chiffrement symétrique qui est stockée dans une mémoire (17) du compteur de fluide et dans une mémoire (23) du boîtier de coupure.

9. Procédé de sécurisation d'une installation, mis en œuvre dans un compteur de fluide (1) selon l'une des revendications précédentes, et comprenant les étapes de :
- évaluer un débit de fluide fourni à l'installation raccordée au compteur de fluide (1) et, si le débit de fluide demeure supérieur à un premier seuil de débit prédéterminé pendant au moins une première durée prédéterminée, transmettre une trame de commande interne intégrant une commande de fermeture à l'interface de communication (20) du boîtier de coupure (3) via la première interface de communication (12) pour fermer la vanne électromécanique (4) ;
- suite à la fermeture de la vanne électromécanique, acquérir via la première interface de communication une première trame de commande externe intégrant une commande d'ouverture et produite par le boîtier de coupure suite à une action manuelle sur un organe d'actionnement du boîtier de coupure, produire une trame de commande interne intégrant la commande d'ouverture, et transmettre ladite trame de commande interne à l'interface de communication du boîtier de coupure via la première interface de communication pour rouvrir la vanne électromécanique.

10. Programme d'ordinateur comprenant des instructions qui conduisent le compteur de fluide selon l'une des revendications 1 à 8 à exécuter les étapes du procédé de sécurisation selon la revendication 9.

11. Support d'enregistrement lisible par ordinateur, sur lequel est enregistré le programme d'ordinateur selon la revendication 10.

12. Boîtier de coupure (3) pouvant être monté à proximité d'un compteur de fluide (1), et comprenant :
- une vanne électromécanique (4) ;
- une mémoire (23) ;
- une interface de communication (20) agencée pour recevoir via une liaison radioélectrique et pour stocker dans la mémoire (23) une trame de commande interne (50) intégrant une commande d'ouverture ou une commande de fermeture de la vanne électromécanique (4), la deuxième interface de communication étant en outre agencée pour recevoir et pour être alimentée par une énergie électrique transmise via la liaison radioélectrique ;
- un organe d'actionnement pouvant être actionné manuellement par une personne située à proximité du boîtier de coupure ;
- un deuxième module de traitement (21) agencé pour acquérir dans la mémoire (23) la trame de commande interne, pour déchiffrer la trame de commande interne et en extraire une commande d'ouverture ou une commande de fermeture, pour piloter une ouverture ou une fermeture de la vanne électromécanique, et pour écrire dans la mémoire une trame d'acquittement (60), le deuxième module de traitement (21) étant en outre agencé pour détecter que l'organe d'actionnement a été actionné, et pour, suite à cet actionnement, écrire dans la mémoire (23) une première trame de commande externe signifiant un actionnement manuel de l'organe d'actionnement demandant un envoi au boîtier de coupure (3) d'une commande d'ouverture de la vanne électromécanique (4) par le compteur de fluide (1).

13. Boîtier de coupure selon la revendication 12, l'organe d'actionnement étant un bouton poussoir (28).

14. Boîtier de coupure selon l'une des revendications 12 ou 13, dans lequel le deuxième module de traitement (21) se trouve par défaut dans un mode de veille, l'interface de communication (20) étant agencée pour produire un signal d'activation du deuxième module de traitement lorsque la deuxième interface de communication reçoit de l'énergie électrique.

15. Boîtier de coupure selon l'une des revendications 12 à 14, dans lequel une clé de chiffrement symétrique d'un algorithme de chiffrement est stockée dans la mémoire du boîtier de coupure, le deuxième module de traitement étant agencé pour déchiffrer la trame de commande interne en utilisant la clé de chiffrement symétrique.

16. Système de mesure comportant un compteur de fluide (1) selon l'une des revendications 1 à 8 et un boîtier de coupure (3) selon l'une des revendications 12 à 15.

## Patentansprüche

1. Fluidzähler (1), umfassend:
- eine erste Kommunikationsschnittstelle (12), die ausgebildet ist, um über eine Funkverbindung mit einer Kommunikationsschnittstelle (20) eines Abschaltgehäuses (3) zu kommunizieren, das ein elektromechanisches Ventil (4) umfasst, und um über die elektrische Verbindung eine elektrische Energie zu übertragen, die geeignet ist, die Kommunikationsschnittstelle des Abschaltgehäuses elektrisch zu versorgen;
- ein erstes Verarbeitungsmodul (16), das ausgebildet ist, um:
eine Fluiddurchflussmenge, die an eine mit dem Fluidzähler verbundene Anlage geliefert wird, zu evaluieren und, wenn die Fluiddurchflussmenge für mindestens eine erste vorbestimmte Dauer über einem ersten vorbestimmten Durchflussmengenschwellenwert bleibt, ein Fluidleck in der Anlage zu erfassen und einen internen Befehlsrahmen (50), der einen Schließbefehl integriert, über die erste Kommunikationsschnittstelle an die Kommunikationsschnittstelle des Abschaltgehäuses zu übertragen, um das elektromechanische Ventil zu schließen;
nach dem Schließen des elektromechanischen Ventils, über die erste Kommunikationsschnittstelle einen ersten externen Befehlsrahmen, der einen Öffnungsbefehl integriert und von dem Abschaltgehäuse (3) nach einer manuellen Betätigung eines Betätigungselements (28) des Abschaltgehäuses erzeugt wird, zu erfassen, einen internen Befehlsrahmen, der den Öffnungsbefehl integriert, zu erzeugen und den genannten internen Befehlsrahmen über die erste Kommunikationsschnittstelle an die Kommunikationsschnittstelle des Abschaltgehäuses zu übertragen, um das elektromechanische Ventil erneut zu öffnen.

2. Fluidzähler nach Anspruch 1, bei dem nach der Übertragung des internen Befehlsrahmens und dem erneuten Öffnen des elektromechanischen Ventils (4) das erste Verarbeitungsmodul (16) ausgebildet ist, um das elektromechanische Ventil nur offen zu halten, wenn die Fluiddurchflussmenge für mindestens eine zweite vorbestimmte Dauer nach dem erneuten Öffnen des elektromechanischen Ventils unter einem zweiten vorbestimmten Durchflussmengenschwellenwert bleibt.

3. Fluidzähler nach einem der vorhergehenden Ansprüche, bei dem das erste Verarbeitungsmodul (16) ausgebildet ist, um das elektromechanische Ventil (4) erneut zu schließen oder es geschlossen zu halten, wenn die Fluiddurchflussmenge für mindestens eine dritte vorbestimmte Dauer größer als ein dritter vorbestimmter Durchflussmengenschwellenwert ist.

4. Fluidzähler nach einem der vorhergehenden Ansprüche, ferner umfassend eine zweite Kommunikationsschnittstelle (14), die ausgebildet ist, um mit einer anderen externen Vorrichtung als dem Abschaltgehäuse (3) zu kommunizieren, wobei das erste Verarbeitungsmodul ausgebildet ist, um nach dem Schließen des elektromechanischen Ventils über die zweite Kommunikationsschnittstelle einen zweiten externen Befehlsrahmen, der einen Öffnungsbefehl integriert und von der externen Vorrichtung erzeugt wird, zu erfassen, einen internen Befehlsrahmen, der den Öffnungsbefehl integriert, zu erzeugen und den genannten internen Befehlsrahmen über die erste Kommunikationsschnittstelle an die Kommunikationsschnittstelle des Abschaltgehäuses zu übertragen, um das elektromechanische Ventil erneut zu öffnen.

5. Fluidzähler nach einem der vorhergehenden Ansprüche, bei dem die erste Kommunikationsschnittstelle (12) ausgebildet ist, um den internen Befehlsrahmen (50) in einen Speicher (23) des Abschaltgehäuses zu schreiben und dann einen Bestätigungsrahmen (60) in dem Speicher des Abschaltgehäuses zu lesen.

6. Fluidzähler nach Anspruch 5, bei dem der interne Befehlsrahmen (50) einen aktuellen Wert eines Zählers für interne Befehlsrahmen (53) integriert, der bei jeder Übertragung des internen Befehlsrahmens durch den Fluidzähler an das Abschaltgehäuse inkrementiert wird.

7. Fluidzähler nach einem der vorhergehenden Ansprüche, ferner umfassend Authentifizierungsmittel, die ausgebildet sind, um den internen Befehlsrahmen zu authentifizieren.

8. Fluidzähler nach Anspruch 7, bei dem die Authentifizierungsmittel ausgebildet sind, um den internen Befehlsrahmen (50) zumindest teilweise zu verschlüsseln, indem ein Verschlüsselungsalgorithmus verwendet wird, der einen symmetrischen Verschlüsselungsschlüssel hat, der in einem Speicher (17) des Fluidzählers und in einem Speicher (23) des Abschaltgehäuses gespeichert ist.

9. Sicherungsverfahren zur Sicherung einer Anlage, das in einem Fluidzähler (1) nach einem der vorhergehenden Ansprüche durchgeführt wird und die Schritte umfasst:
- Evaluieren einer Fluiddurchflussmenge, die an eine mit dem Fluidzähler (1) verbundene Anlage geliefert wird, und, wenn die Fluiddurchflussmenge für mindestens eine erste vorbestimmte Dauer über einem ersten vorbestimmten Durchflussmengenschwellenwert bleibt, Übertragen eines internen Befehlsrahmens, der einen Schließbefehl integriert, über die erste Kommunikationsschnittstelle (12) an die Kommunikationsschnittstelle (20) des Abschaltgehäuses (3), um das elektromechanische Ventil (4) zu schließen;
- nach dem Schließen des elektromechanischen Ventils, Erfassen eines ersten externen Befehlsrahmens, der einen Öffnungsbefehl integriert und der von dem Abschaltgehäuse nach einer manuellen Betätigung eines Betätigungselements des Abschaltgehäuses erzeugt wird, über die erste Kommunikationsschnittstelle, Erzeugen eines internen Befehlsrahmens, der den Öffnungsbefehl integriert, und Übertragen des genannten internen Befehlsrahmens über die erste Kommunikationsschnittstelle an die Kommunikationsschnittstelle des Abschaltgehäuses, um das elektromechanische Ventil erneut zu öffnen.

10. Computerprogramm, das Anweisungen umfasst, die den Fluidzähler nach einem der Ansprüche 1 bis 8 veranlassen, die Schritte des Sicherungsverfahrens nach Anspruch 9 auszuführen.

11. Computerlesbares Speichermedium, auf dem das Computerprogramm nach Anspruch 10 gespeichert ist.

12. Abschaltgehäuse (3), das in der Nähe eines Fluidzählers (1) angebracht werden kann und umfasst:
- ein elektromechanisches Ventil (4);
- einen Speicher (23);
- eine Kommunikationsschnittstelle (20), die ausgebildet ist, um einen internen Befehlsrahmen (50), der einen Öffnungsbefehl oder einen Schließbefehl zur Öffnung bzw. Schließung des elektromechanischen Ventils (4) integriert, über eine Funkverbindung zu empfangen und in dem Speicher (23) zu speichern, wobei die zweite Kommunikationsschnittstelle ferner ausgebildet ist, um elektrische Energie, die über die Funkverbindung übertragen wird, zu empfangen und von dieser gespeist zu werden;
- ein Betätigungselement, das von einer Person, die sich in der Nähe des Abschaltgehäuses befindet, manuell betätigt werden kann;
- ein zweites Verarbeitungsmodul (21), das ausgebildet ist, um den internen Befehlsrahmen in dem Speicher (23) zu erfassen, um den internen Befehlsrahmen zu entschlüsseln und aus diesem einen Öffnungsbefehl oder einen Schließbefehl zu extrahieren, um ein Öffnen oder ein Schließen des elektromechanischen Ventils zu steuern und in den Speicher einen Bestätigungsrahmen (60) zu schreiben, wobei das zweite Verarbeitungsmodul (21) ferner ausgebildet ist, um zu erfassen, dass das Betätigungselement betätigt wurde, und um nach dieser Betätigung in den Speicher (23) einen ersten externen Befehlsrahmen zu schreiben, der eine manuelle Betätigung des Betätigungselements anzeigt, die ein Senden eines Öffnungsbefehls zum Öffnen des elektromechanischen Ventils (4) durch den Fluidzähler (1) an das Abschaltgehäuse (3) erfordert.

13. Abschaltgehäuse nach Anspruch 12, wobei das Betätigungselement ein Druckknopf (28) ist.

14. Abschaltgehäuse nach einem der Ansprüche 12 oder 13, bei dem sich das zweite Verarbeitungsmodul (21) standardmäßig in einem Standby-Modus befindet, wobei die Kommunikationsschnittstelle (20) ausgebildet ist, um ein Aktivierungssignal zur Aktivierung des zweiten Verarbeitungsmoduls zu erzeugen, wenn die zweite Kommunikationsschnittstelle elektrische Energie empfängt.

15. Abschaltgehäuse nach einem der Ansprüche 12 bis 14, bei dem ein symmetrischer Verschlüsselungsschlüssel eines Verschlüsselungsalgorithmus in dem Speicher des Abschaltgehäuses gespeichert ist, wobei das zweite Verarbeitungsmodul ausgebildet ist, um den internen Befehlsrahmen unter Verwendung des symmetrischen Verschlüsselungsschlüssels zu entschlüsseln.

16. Messsystem, umfassend einen Fluidzähler (1) nach einem der Ansprüche 1 bis 8 und ein Abschaltgehäuse (3) nach einem der Ansprüche 12 bis 15.

## Claims

1. A fluid meter (1) comprising:
• a first communication interface (12) arranged both to communicate via a radio link with a communication interface (20) of a cut-off unit (3) comprising an electromechanical valve (4), and also to transmit electrical energy via the radio link, the electrical energy being adapted to power the communication interface of the cut-off unit;
• a first processor module (16) arranged:
• to evaluate a flow rate of fluid being supplied to an installation connected to the fluid meter and, if the flow rate of fluid remains greater than a first predetermined flow rate threshold for at least a first predetermined duration, to detect that there is a leak of fluid in the installation and transmit an internal command frame (50) via the first communication interface to the communication interface of the cut-off unit, the internal command frame incorporating a closing command in order to close the electromechanical valve;
• following closing of the electromechanical valve, to acquire a first external command frame via the first communication interface, the first external command frame incorporating an opening command and being produced by the cut-off unit (3) following a manual action on an actuator member (28) of the cut-off unit, to produce an internal command frame incorporating the opening command, and to transmit said internal command frame via the first communication interface to the communication interface of the cut-off unit in order to reopen the electromechanical valve.

2. A fluid meter according to claim 1, wherein, following transmission of the internal command frame and following reopening of the electromechanical valve (4), the first processor module (16) is arranged to keep the electromechanical valve open only providing the fluid flow rate remains less than a second predetermined flow rate threshold for at least a second predetermined duration after reopening of the electromechanical valve.

3. A fluid meter according to any preceding claim, wherein the first processor module (16) is arranged to re-close the electromechanical valve (4) or to keep it closed in the event of the fluid flow rate being greater a third predetermined flow rate threshold during at least a third predetermined duration.

4. A fluid meter according to any preceding claim, also comprising a second communication interface (14) arranged to communicate with an external device other than the cut-off unit (3), the first processor module being arranged, following closing of the electromechanical valve, to acquire a second external command frame via the second communication interface, the second external command frame incorporating an opening command produced by the external device, to produce an internal command frame incorporating the opening command, and to transmit said internal command frame via the first communication interface to the communication interface of the cut-off unit in order to reopen the electromechanical valve.

5. A fluid meter according to any preceding claim, wherein the first communication interface (12) is arranged to write the internal command frame (50) in a memory (23) of the cut-off unit, and then to read an acknowledgement frame (60) in the memory of the cut-off unit.

6. A fluid meter according to claim 5, wherein the internal command frame (50) incorporates the current value of an internal command frame counter (53) that is incremented each time an internal command frame is transmitted by the fluid meter to the cut-off unit.

7. A fluid meter according to any preceding claim, further comprising authentication means arranged to authenticate the internal command frame.

8. A fluid meter according to claim 7, wherein the authentication means are arranged to encrypt at least part of the internal command frame (50) by using an encryption algorithm having a symmetrical encryption key that is stored both in a memory (17) of the fluid meter and also in a memory (23) of the cut-off unit.

9. A method of making safe an installation, the method being performed in a fluid meter (1) according to any preceding claim, and comprising the steps of:
• evaluating a flow rate of fluid being supplied to an installation connected to the fluid meter (1) and, if the fluid flow rate remains greater than a first predetermined flow rate threshold for at least a first predetermined duration, transmitting an internal command frame via the first communication interface (12) to the communication interface (20) of the cut-off unit (3), the internal command frame incorporating a closing command in order to close the electromechanical valve (4);
• following closing of the electromechanical valve, acquiring a first external command frame via the first communication interface, the first external command frame incorporating an opening command produced by the cut-off unit following manual action on an actuator member of the cut-off unit, producing an internal command frame incorporating the opening command, and transmitting said internal command frame via the first communication interface to the communication interface of the cut-off unit in order to reopen the electromechanical valve.

10. A computer program including instructions for causing the fluid meter according to any one of claims 1 to 8 to execute the steps of the method of making safe according to claim 9.

11. A computer readable storage medium having stored thereon the computer program according to claim 10.

12. A cut-off unit (3) suitable for being mounted in the proximity of a fluid meter (1), and comprising:
• an electromechanical valve (4);
• a memory (23);
• a communication interface (20) arranged to receive an internal control frame (50) via a radio link and store it in the memory (23), the internal control frame incorporating an opening or closing command to open or close the electromechanical valve (4), the second communication interface also being arranged to receive electrical energy transmitted via the radio link, and to be powered thereby;
• an actuator member suitable for being actuated manually by a person situated in the proximity of the cut-off unit;
• a second processor module (21) arranged to acquire the internal command frame in the memory (23), to decrypt the internal command frame and extract therefrom an opening or closing command in order to command opening or closing of the electromechanical valve, and to write an acknowledgement frame (60) in the memory, the second processor module (21) also being arranged to detect that the actuator member has been actuated, and following such actuation, to write a first external command frame in the memory (23) representative of a manual actuation of the actuator member requesting the fluid meter (1) to send a command for opening the electromechanical valve (4) to the cut-off unit (3).

13. A cut-off unit according to claim 12, the actuator member being a pushbutton (28).

14. A cut-off unit according to claim 12 or claim 13, wherein the second processor module (21) is to be found by default in a standby mode, and the communication interface (20) is arranged to produce an activation signal for activating the second processor module when the second communication interface receives electrical energy.

15. A cut-off unit according to any one of claims 12 to 14, wherein a symmetrical encryption key of an encryption algorithm is stored in the memory of the cut-off unit, the second processor being arranged to decrypt the internal control frame by using the symmetrical encryption key.

16. A measurement system including a fluid meter (1) according to any one of claims 1 to 8 and a cut-off unit (3) according to any one of claims 12 to 15.
